# EUROPEAN PATENT APPLICATION

(11) **EP 4 617 306 A1**
(43) Date of publication of application: **17.09.2025**
(21) Application number: 23888711.1
(22) Date of filing: 07.11.2023
(51) Int. Cl.: C08J 11/16

(54) **COMPOSITE MATERIAL TREATMENT METHOD, GAS AND RECYCLING SYSTEM**

(30) Priority: 07.11.2022 JP 2022178403
(71) Applicant: Asahi Kasei Kabushiki Kaisha, Tokyo 1000006 (JP)
(72) Inventor: OKADA, Yuji, Tokyo 100-0006 (JP)
(74) Representative: Hoffmann Eitle
(86) International application number: PCT/JP2023/040094
(87) International publication number: WO 2024/101364

(57) **Abstract**

The present disclosure is directed to providing a method for processing a composite material that enables not only the recovery of a reinforcing material from a reinforced composite material but also the utilization of carbon dioxide generated during recycling as an industrial raw material. To solve the above-mentioned issue, the present disclosure provides a method for processing a composite material, including recovering a reinforcing material from the composite material including a resin and the reinforcing material by decomposing the resin by sulfuric acid and heating. The method further includes recovering a gas generated through the decomposition of the resin, and the ratio of carbon dioxide in the recovered gas is 90 mass% or more.

## Description

### TECHNICAL FIELD

The present disclosure relates to a method for processing a composite material, a gas, and a recycling system.

### BACKGROUND

Composite reinforced materials (hereinafter, simply referred to as "composite materials") are materials formed by compositing a resin that is the base material with a reinforcement material, such as carbon fibers, glass fibers, carbon fibers, glass fibers, metal fibers, organic high-strength fibers, an inorganic filler, a metal-based filler, carbon nanotubes, and cellulose nanofibers. Their characteristic is that they have high strength and are lighter compared to metals such as iron. Utilizing their characteristics, composite materials have begun to be used not only in some automobiles, aircraft, etc., but also in other application, such as wind turbine blades, as a material that significantly contributes to improving energy efficiency.

Here, the production volume of carbon fibers, which are reinforcing materials of carbon fiber-reinforced plastics, is expected to increase more than twofold over five years, from 60,000 tons in 2015 to 140,000 tons in 2020. Carbon fibers are produced by first synthesizing a chemical substance called acrylonitrile from petroleum and then manufacturing acrylic fibers by spinning it into yarn. Then, a carbon fiber is produced by performing a carbonization process at an extremely high temperature of several thousand degrees. Carbon fibers produced are sometimes used as is, but in most cases, they are processed into various forms such as continuous fibers, nonwoven fabrics, and chopped fibers. Furthermore, by being composited with various types of resin, they are used as a carbon fiber reinforced plastic (CFRP), which is one type of composite material.

A carbon fiber reinforced plastic has excellent material properties such as being strong, hard, rust-resistant, and rot-resistant. However, due to the excellent material properties thereof, the disposal method thereof has become an issue. General plastics can be easily burned, but carbon fibers have a highly graphitized structure, making them difficult to burn. For this reason, in Japan, scraps and waste materials of a carbon fiber reinforced plastic are crushed and then disposed of in landfills as industrial waste. Crushed and landfilled carbon fibers do not biodegrade and become a cause of marine plastic pollution.

Due to such circumstances, in recent years, techniques for separating and recovering reinforcing materials from used composite materials for reuse have been proposed.

For example, there is a method of processing a carbon fiber reinforced plastic at a high temperature of 500 to 700 °C in a low-oxygen atmosphere to thermally decompose the resin component, which is the base material, and recover only the carbon fibers. Additionally, a technology called the two-step thermal decomposition method has also been developed. This technology first thermally decomposes the resin component to a certain extent in the first step, recovering combustible gas from it. By utilizing this gas as combustion gas for heating, fuel consumption is reduced. Subsequently, in the second step, thermal decomposition is performed again to remove residual resin components on the fiber surfaces through thermal decomposition (for example, see PTL 1).

Moreover, a method utilizing superheated steam has also been proposed. Superheated steam refers to steam that has a temperature above the saturation temperature at a given pressure by further heating saturated steam. Using this superheated steam, there is a method to efficiently thermally decompose the resin component, which is the base material, and recover only the carbon fibers (for example, see PTL 2).

Additionally, a technique of dissolving the resin component in a specific organic solvent has also been proposed.

This method is characterized by its low processing temperature of 100 to 150 °C and the fact that no residual resin remains because it is a wet process, thereby maintaining the strength of the recovered carbon fibers (for example, see NPL 1).

### CITATION LIST

### Patent Literature

PTL 1: JP 5347056 B
PTL 2: JP 5876968 B

### Non-patent Literature

NPL 1: Hitachi Chemical Technical Report No. 42 (2004.1)
NPL 2: The Society of Polymer Science, Japan, Polymers, Vol. 54, March Issue, 2005.

### SUMMARY

### (Technical Problem)

However, although the above-described conventionally proposed technologies are capable of reducing carbon dioxide emissions compared to the production of new carbon fibers, they cannot eliminate the energy consumption required for recycling or the generation of carbon dioxide resulting from resin decomposition.

Therefore, it is desired to develop a technology that contributes to the further reduction of the environmental burden by utilizing the carbon dioxide generated during recycling as an industrial raw material. In particular, since more than 80% of the carbon dioxide generated in recycling originates from the decomposition of resins, the development of a technology that utilizes this decomposition gas as an industrial raw material is needed.

Additionally, a technology for manufacturing resins such as polycarbonate using carbon dioxide as an industrial raw material has been developed (for example, see NPL 2). To utilize such carbon dioxide as an industrial raw material, the concentration of carbon dioxide in the gas should be high.

Here, in the decomposition method proposed in PTL 1, the process is performed under low-oxygen conditions to suppress the reduction in the strength of the recovered carbon fibers. However, a problem arises where an epoxy resin, which is the primary resin in thermosetting carbon fiber-reinforced plastics, generates bisphenol A, which is a suspected carcinogen, during decomposition. Moreover, since the concentration of carbon dioxide in the gas generated during the decomposition is low, it cannot be utilized as an industrial raw material.

The technique in PTL 2 also has the same issues as that in PTL 1.

Since the atmospheric pressure dissolution method proposed in NPL 1 dissolves the resin in a solvent, carbon dioxide as an industrial raw material cannot be obtained from the resin, thus preventing the utilization of carbon dioxide as an industrial raw material. Furthermore, various organic substances remain in the solvent after dissolution, and isolating the organic substances that could serve as industrial raw materials requires additional energy, making reuse difficult.

As described above, it is evident that the conventionally proposed methods for separating and recovering reinforcing materials from composite materials all face difficulties in utilizing the carbon dioxide generated during decomposition as an industrial raw material.

Therefore, the present disclosure has been conceived of in view of the above problem and an object thereof is to provide a method for processing a composite material that not only allows the recovery of a reinforcing material from the reinforced composite material but also enables the utilization of carbon dioxide in the gas generated during the decomposition as an industrial raw material.

### (Solution to Problem)

In order to solve the above issues, the present inventor has diligently studied a method for processing a composite material, including a step of recovering a reinforcing material from the composite material comprising a resin and the reinforcing material by decomposing the resin by sulfuric acid and heating. As a result, the present inventor has found that by further including a step of recovering the gas generated through the decomposition of the resin and increasing the ratio of carbon dioxide in the recovered gas, the above object can be achieved, leading to the completion of the present disclosure.

Specifically, the present disclosure provides the following.
[1] A method for processing a composite material, comprising recovering a reinforcing material from the composite material comprising a resin and the reinforcing material by decomposing the resin by sulfuric acid and heating,
   the method further comprising recovering a gas generated through the decomposition of the resin, and a ratio of carbon dioxide in the recovered gas being 90 mass% or more.
[2] The method for processing a composite material according to [1], further comprising utilizing the recovered gas as an industrial raw material.
[3] The method for processing a composite material according to [1], further comprising utilizing the carbon dioxide contained in the recovered gas as an industrial raw material.
[4] The method for processing a composite material according to any one of [1] to [3], wherein the recovering the gas includes separating oxygen and nitrogen from the gas.
**[5]** The method for processing a composite material according to any one of [1] to [4], wherein the recovering the gas includes separating water vapor from the gas.
**[6]** The method for processing a composite material according to any one of [1] to [5], wherein the recovering the reinforcing material comprises decomposing the resin by using a solution containing oxidatively active species derived from sulfuric acid as a decomposition solution to immerse the composite material in the decomposition solution and performing heating.
**[7]** The method for processing a composite material according to [6], wherein the decomposition solution is a solution obtained through electrolysis of a sulfuric acid solution.
**[8]** The method for processing a composite material according to [6] or [7],
   wherein the decomposition solution is heated to and maintained at a temperature of 100 °C to 200 °C, and
   the reinforcing material is recovered by performing filtering, washing, and drying after the decomposition of the resin.
**[9]** The method for processing a composite material according to [6], wherein the recovering the reinforcing material further comprises supplying oxygen to the solution obtained through electrolysis of sulfuric acid.
[10] The method for processing a composite material according to any one of [1] to [9], wherein the reinforcing material of the composite material is a carbon material of a carbon fiber, a carbon nanotube, or a graphene.
[11] A gas recovered together with a reinforcing material when the reinforcing material is recovered from a composite material comprising a resin and the reinforcing material by decomposing the resin by sulfuric acid and heating,
   a ratio of carbon dioxide in the recovered gas being 90 mass% or more.
[12] A recycling system comprising recovering a reinforcing material from a composite material comprising a resin and the reinforcing material by decomposing the resin by sulfuric acid and heating,
   the recycling system comprising reutilizing a gas, liquid, or solid generated during the decomposition of the resin as an industrial raw material.
**[13]** The recycling system according to [12], wherein a raw material reutilized as the industrial raw material is a gas.

### (Advantageous Effect)

According to the present disclosure, a method for processing a composite material is provided that not only enables the recovery of a reinforcing material from a reinforced composite material but also allows the utilization of carbon dioxide generated during decomposition as an industrial raw material.

### DETAILED DESCRIPTION

The following provides a detailed description of embodiments for embodying the present disclosure (hereinafter referred to as "the present embodiment"). Note that the present disclosure is not limited by the description given below, and may be implemented with various changes or modifications that are within the essential scope thereof.

First, a composite material used in a method for processing a composite material of the present embodiment will be described.

### <Composite Material>

A composite material of the present embodiment refers to a material of which strength is improved by compositing a base material such as a resin with a reinforcing material that is a different type of material such as fibers or a filler. The method of compositing is not limited, and may be a method that utilizes interactions such as hydrogen bonding and intermolecular forces, and may be dispersion, adhesion, bonding, adsorption, carrying, placement, or the like.

The reinforced composite material may include a base material, a reinforcing material, and other additives.

### (Reinforcing Material)

The reinforcing material that constitutes the composite material of the present embodiment refers to a material that is compounded or dispersed in a matrix resin, which serves as the base material of the composite material. Examples include a carbon fiber, glass fiber, metal fiber, organic high-strength fiber, inorganic filler, carbon nanotube, and cellulose nanofiber. It is preferable that the reinforcing material is a carbon material of a carbon fiber, carbon nanotube, or graphene.

The reinforcing material can be either fibrous or particulate. Although the definition is not clear, generally, those with a large aspect ratio (length/width) (e.g., aspect ratio of, for example, 100 or more, preferably 200 or more) are called fibrous, and those with a small aspect ratio (length/width) (e.g., aspect ratio of, for example, less than 200, preferably less than 100) are called particulate.

The carbon fiber is a fiber made from an acrylic fiber or pitch (a byproduct of petroleum, coal, coal tar, etc.) by carbonizing it at a high temperature.

The glass fiber is a fiber produced by melting and drawing glass into a fibrous form.

The metal fiber is a fiber produced by processing a metal, such as stainless steel, aluminum, iron, nickel, and copper, into a thread-like form through methods such as plastic working (e.g., rolling), melt spinning, CVD method, etc.

The organic high-strength fiber is a fiber made of a resin such as polyamide, polyester, acrylic resin, polyparaphenylene benzobisoxazole, and polyimide.

These fibers are processed into an intermediate base material such as continuous fibers or non-woven fabric, and composited with the base material.

The continuous fibers are long fibers used in the form of unidirectional layers where all fibers are disposed parallel to each other, and may be knitted or woven. In addition, quasi-isotropic, orthotropic, and anisotropic plates can be produced by stacking unidirectional layers in various directions.

The nonwoven fabric is a sheet of intertwined fibers without weaving the fibers. A nonwoven fabric is produced by bonding or intertwining fibers to each other through thermal, mechanical, or chemical action.

Elements constituting the inorganic filler include, for example, elements in Groups 1 to 16 of the periodic table. This element is not limited, but elements belonging to Groups 2 to 14 of the periodic table are preferred. Specific examples thereof include Group 2 elements (e.g., Mg, Ca, and Ba), Group 3 elements (e.g., La, Ce, Eu, Ac, and Th), Group 4 elements (e.g., Ti, Zr, and Hf), Group 5 elements (e.g., V, Nb, and Ta), Group 6 elements (e.g., Cr, Mo, and W), Group 7 elements (e.g., Mn and Re), Group 8 elements (e.g., Fe, Ru, and Os), Group 9 elements (e.g., Co, Rh, and Ir), Group 10 elements (e.g., Ni, Pd, and Pt), Group 11 elements (e.g., Cu, Ag, and Au), Group 12 elements (e.g., Zn and Cd), Group 13 elements (e.g., Al, Ga, and In), and Group 14 elements (e.g., Si, Ge, Sn, and Pb).

Inorganic compounds containing these elements include oxides (including complex oxides), halides (fluorides, chlorides, bromides, and iodides), oxoacid salts (e.g., nitrates, sulfates, phosphates, borates, perchlorates, and carbonates), and compounds formed from negative elements and the aforementioned elements such as carbon monoxide, carbon dioxide, and carbon disulfide, as well as salts such as hydrocyanic acid, cyanides, cyanates, thiocyanates, and carbides, for example.

One inorganic filler may contain one or more of the aforementioned elements. A plurality of elements may be uniformly or unevenly distributed in the particles, or the surfaces of particles of a compound of one element may be coated with a compound of another element. These inorganic fillers may be used alone or in a combination of two or more.

Among these, preferred inorganic fillers are not limited, but include, for example, at least one element selected from the group consisting of silica, zirconia, titanium, zinc, iron, copper, chromium, cadmium, carbon, tungsten, antimony, nickel, and platinum.

The carbon nanotube is a single or multilayered coaxial tube of six-membered ring networks of carbon (graphene sheets). It is one allotrope of carbon and is sometimes classified as one type of fullerene.

The cellulose nanofiber refers to a thin cellulose fiber from wood, processed to have a width of about 15 nanometers.

It should be noted that the content of the reinforcing material in the composite material of the present embodiment is preferably 10 to 80 mass% per 100 mass% of the composite material. The content of the reinforcing material is more preferably 15 mass% or more, and even more preferably, 20 mass% or more. Further, the content of the reinforcing material is preferably 75 mass% or less, and even more preferably, 70 mass% or less.

### (Base Material)

The base material constituting the composite material of the present embodiment refers to the resin used as the matrix of the composite material, and a thermoplastic resin or thermosetting resin is used.

The thermoplastic resin refers to a resin that softens when heated to the glass transition temperature or melting point thereof so that it can be molded into the desired shape. Generally, thermoplastic resins are often difficult to machine through processes such as cutting and grinding, and injection molding is widely used where the resin is heated until softened, then injected into a mold and cooled to solidify into the final product. Examples include polyethylene, polypropylene, polystyrene, ABS resins, vinyl chloride resins, methyl methacrylate resins, nylon, fluororesin, polycarbonate, and polyester resins.

The thermosetting resin refers to a resin that, when heated, causes polymerization to form a polymer network structure to harden and cannot be restored to its original state. In use, resins with a relatively low molecular weight so as to have fluidity are shaped into a predetermined shape and then reacted and cured by heating or other means. There are types of resins that are used as adhesives or putties by mixing Component A (base) with Component B (hardener). These are epoxy resins that are thermosetting resins, where a polymerization reaction occurs upon mixing. Thermosetting resins are hard and resistant to heat and solvents. Examples include phenolic resins, epoxy resins, unsaturated polyester resins, and polyurethane.

In the present embodiment, the content of the base material in the composite material is preferably 20 to 90 parts by mass per 100 parts by mass of the reinforcing material. Moreover, the content of the base material is more preferably 25 parts by mass or more, and even more preferably 30 parts by mass or more, per 100 parts by mass of the reinforcing material. Furthermore, the content of the base material is preferably 85 parts by mass or less, and even more preferably 80 parts by mass or less, per 100 parts by mass of the reinforcing material.

### (Other Additives)

Other additives are not particularly limited, and examples include flame retardants, heat stabilizers, antioxidants, light absorbers, mold release agents, lubricants, various stabilizers, antistatic agents, dyes and pigments, and various reagents used in the above-described compounding.

The content of other additives in the composite material of the present embodiment may be 0.01 mass% or less and 80 mass% or less per 100 mass% of the composite material.

### <Method for Processing Composite Material>

The method for processing a composite material of the present embodiment includes a step of recovering a reinforcing material from the composite material comprising a resin and the reinforcing material by decomposing the resin by sulfuric acid and heating.

The step of recovering the reinforcing material by decomposing the resin may include, for example:
A) a step of obtaining a treatment solution containing oxidatively active species by electrolyzing sulfuric acid;
B) a step of immersing the composite material, which is a scrap discarded after use or from the manufacturing process, in the treatment solution to decompose and remove the base material; and
C) a step of recycling the reinforcing material by washing and drying the reinforcing material from which the base material has been removed.

The method for processing a composite material of the present embodiment further includes a step of recovering a gas generated through the decomposition of the resin, and the ratio of carbon dioxide in the recovered gas is 90 wt% or more.

By not only recovering the reinforcing material after the decomposing the resin in the composite material but also recovering the gas, carbon dioxide in the gas generated during the decomposition can be efficiently obtained.

From a similar perspective, the ratio of carbon dioxide in the recovered gas is preferably 92 wt% or more, and more preferably 95 wt% or more.

Additionally, it is preferable that the method for processing a composite material of the present embodiment further includes a step of utilizing the recovered gas as an industrial raw material. Utilizing carbon dioxide in the gas generated during the thermal decomposition of the resin as an industrial raw material is particularly preferable from the perspective of effectively utilizing the recovered gas with a high carbon dioxide concentration.

The step of recovering the gas is not particularly limited as long as the gas generated through the decomposition of the resin is recovered and contains 90 wt% or more carbon dioxide. However, it is preferable to include a step of separating oxygen and nitrogen from the recovered gas. This enables more efficient recovery of carbon dioxide in the gas generated during the decomposition.

The methods for separating oxygen and nitrogen from carbon dioxide are mainly classified into: (1) chemical absorption in which carbon dioxide is dissolved in an absorption liquid; (2) physical adsorption in which carbon dioxide is adsorbed onto a solid adsorbent; (3) physical absorption in which high-pressure carbon dioxide is physically absorbed into an absorption liquid; (4) membrane separation in which carbon dioxide is separated using a membrane that allows only carbon dioxide to permeate; and (5) cryogenic separation in which gases are liquefied at extremely low temperatures and carbon dioxide is separated based on differences in boiling points. Among these, (4) the membrane separation in which carbon dioxide is separated using a membrane that allows only carbon dioxide to permeate is preferable because it can handle high carbon dioxide concentrations and has low energy consumption during separation. Examples of the separation membrane include polymer membranes such as polyimide, cellulose acetate, polysulfone, polycarbonate, thermally rearranged (TR) polymer membranes, and PIM (Polymer of Intrinsic Microporosity) membranes; facilitated transport membranes using alkali metal salts or amine compounds as carriers; ionic liquid-containing membranes using ionic liquids as carriers; zeolite membranes with porous structures incorporating molecular sieving capabilities with angstrom-sized pores, amorphous silica membranes, and metal-doped silica membranes; carbon membranes with porous structures derived from organic materials; and metal-organic frameworks (MOF). These membranes may be used alone or in combination.

In the method for processing a composite material of the present embodiment, examples of the method for decomposing the resin include methods by sulfuric acid and heating. Among these, using sulfuric acid is preferable, and using an electrolytic sulfuric acid method is more preferable due to its higher efficiency in decomposing the resin.

The electrolytic sulfuric acid method is a method for processing a composite material characterized in that a composite material composed of a base material and a reinforcing material is immersed in a treatment solution containing oxidatively active species obtained by electrolyzing a sulfuric acid solution, whereby the base material decomposes into water and carbon dioxide, the decomposition products after decomposition dissolve in the treatment solution, and subsequently, the reinforcing material is removed from the treatment solution.

The oxidatively active species are generated by electrolyzing a sulfuric acid solution under a given current and a given voltage and specifically include hydroxyl radicals, peroxosulfuric acid, peroxodisulfuric acid, and the like.

A sulfuric acid solution is a solution containing sulfuric acid (H₂SO₄) and water (H₂O). The concentration of sulfuric acid contained in the sulfuric acid solution is preferably 30 to 95 wt%, more preferably 50 to 80 wt%. This is because if the concentration of sulfuric acid is less than 30 wt%, the necessary amount of oxidatively active species for decomposing the base material of the composite material cannot be obtained, and the decomposition of the base material takes a long time. Even with concentrated sulfuric acid at a concentration of 98 wt%, it is theoretically possible to generate oxidatively active species by devising the electrolysis method. However, since the current does not easily flow during electrolysis, the amount of oxidatively active species generated is extremely reduced, or the lifespan of the electrodes used for electrolysis is drastically shortened, making it undesirable.

It should be noted that concentrated sulfuric acid, hydrochloric acid, or nitric acid may be added to the treatment solution containing the electrolyzed oxidatively active species. Furthermore, peroxides such as hydrogen peroxide or peroxosulfuric acid may be added to the treatment solution. In this case, the effect of accelerating the decomposition rate of the base material of the reinforced composite material can be achieved.

In the electrolysis of the sulfuric acid solution, platinum electrodes or carbon electrodes can be used. Additionally, in view of durability, so-called diamond electrodes having a thin diamond coating provided on the surfaces of a metal plate can be used for electrolysis of a sulfuric acid solution with a high concentration. As an electrolysis apparatus for sulfuric acid solution, a diaphragm-type electrolytic cell with diamond electrodes is preferably used.

When diamond electrodes are used, the electrical conditions for the electrolysis may include a current density of 0.01 to 10 A/cm² and a voltage of 0.1 to 100 V. These conditions may be appropriately changed depending on factors such as the type of electrodes, the concentration of sulfuric acid in the sulfuric acid solution, and the liquid volume of the sulfuric acid solution.

It should be noted that the electrolysis is required to be performed in a closed system, and it is preferable that the electrolysis is performed in a closed sulfuric acid solution circulation system in which a given amount of a sulfuric acid solution is circulated. The circulation method can be either by using a pump or the like to circulate the liquid in a direction parallel to the electrode surfaces at a flow rate of 50 mL/min or more, or by natural convection in which the liquid is circulated according to the flow of gas generated by the electrolysis.

The processing time for electrolysis is appropriately adjusted depending on the volume of a sulfuric acid solution, the concentration of sulfuric acid, the flow rate of the sulfuric acid solution, the current-carrying conditions, or the like, and the processing time is preferably 0.5 to 10 hours per 1 liter of a sulfuric acid solution for efficient generation of oxidatively active species.

In the case of the sulfuric acid electrolysis method, in which a sulfuric acid solution is used for electrolysis as the cathode and anode solutions, sulfuric acid in different concentrations may be used for the cathode and the anode. In particular, in the present disclosure, since the sulfuric acid solution containing oxidatively active species obtained through electrolysis of a sulfuric acid solution with a high concentration is effective in promoting the decomposition of the base material of the composite material, it is preferable to increase the concentration of sulfuric acid on the anode side and decrease the concentration of sulfuric acid on the cathode side for prolonging the life of the electrodes.

Electricity can be supplied from a variety of conceivable apparatuses, etc., as a power source for electrolysis of the sulfuric acid solution, and it is preferable to use electricity generated from so-called renewable energy sources such as solar cells. The hydrogen (generated from the cathode) and oxygen (generated from the anode) produced by electrolysis can also be collected and converted to electricity or heat.

The method of supplying the resulting sulfuric acid solution containing the oxidatively active species to the treatment bath used for the decomposition of the base material of the composite material can be either a method of continuously supplying the solution from the electrolysis apparatus to the treatment bath by means of a pump, etc. (continuous method), or a method of circulating a sulfuric acid solution in a closed system so that the treatment solution is collected from the system after electrolysis and the treatment solution is supplied to the treatment bath (batch method). Additionally, the apparatus may be used in combination with an apparatus that can heat, cool, or pressurize the collected treatment solution.

Additionally, since the treatment solution after treating the composite material can be reused repeatedly, it can be collected, adjusted in concentration, and reused as a sulfuric acid solution to generate oxidatively active species again.

It is preferable to heat the treatment solution containing oxidatively active species to enhance the decomposition of the base material of the composite material. The heating temperature depends on the boiling point of the treatment solution; however, the treatment solution is preferably heated to a temperature of 100 °C or higher for efficient and rapid decomposition of the base material of the composite material. The heating temperature may be the boiling point of the sulfuric acid solution or lower, and the solution is heated under atmospheric pressure or in inert gas. Note that the treatment solution may be heated under pressurized or under reduced pressure.

Additionally, when a solution containing oxidatively active species derived from sulfuric acid as a decomposition solution is used, the decomposition solution is heated to and maintained at a temperature of 100 °C to 200 °C. After the decomposition of the resin, the reinforcing material can be recovered by filtering, washing, and drying.

In addition to the step of decomposing the resin and recovering the composite material described above, the present embodiment may further include the step of supplying oxygen into the decomposition solution.

Having the step of supplying oxygen into the decomposition solution in addition to the conventional step accelerates the decomposition rate of the resin constituting the composite material, thus enabling the recovery of high-quality reinforcing material more efficiently than with conventional techniques, without placing a burden on the environment.

Furthermore, supplying oxygen promotes oxidative decomposition reactions, thereby increasing the ratio of carbon dioxide in the generated gas. By ensuring a sufficient presence of oxygen during the decomposition step, the oxidative decomposition reaction can proceed completely, which tends to lower the carbon monoxide ratio and increase the carbon dioxide ratio. Both carbon dioxide and carbon monoxide are water-soluble acidic gases, making their separation difficult. To effectively utilize decomposition-generated gas as an industrial raw material, a high carbon dioxide ratio is required. Therefore, reducing the carbon monoxide ratio allows for optimal utilization of carbon dioxide as an industrial raw material.

The step of supplying oxygen into the decomposition solution is not limited, but it is preferable to supply oxygen during immersion and heating of the composite material because the decomposition efficiency can be further enhanced.

The method of supplying oxygen is not particularly limited, but examples include introducing pure oxygen and ozone as single substance gases, as well as mixed gases containing these single substance gases and other gases. The mixed gas may also be mixtures with inert gases. Furthermore, in view of the cost and the simplicity of the step, it is preferable to use the air as the mixed gas, and a mixed gas of the above-mentioned single substance gas or mixed gas and the air may be used during the step of supplying oxygen into the decomposition solution.

There is no particular limitation on the method of introducing the single substance gas or the mixed gas into the decomposition solution, but examples include bubbling the single substance gas or the mixed gas into the reaction system, for example. The single substance gas or the mixed gas may be introduced through a single inlet or multiple inlets, and the inlet(s) may be made of a plastic, metal, glass, or other material that has an excellent resistance to sulfuric acid.

Various means may also be used for introducing the single substance gas or the mixed gas, such as by introduction into the reaction system or direct connection to the reaction vessel. A pump that supplies the gas, an air header that stores the gas supplied from the pump, and the like may be used to introduce the single substance gas or the mixed gas, and it is more preferable to introduce the gas by microbubbling.

In addition, the single substance gas or the mixed gas introduced into the decomposition solution is a mixture of gases containing 15 volume% or more of the single substance gas, and it is preferable to introduce the mixture of gases into the decomposition solution at 0.01 NL/second or more. This can further accelerate the decomposition rate of the resin. From a similar viewpoint, it is preferable to introduce the mixture of gases at 0.01 NL/second or more into the system (the decomposition solution) from the start of treatment. More preferably, the mixture of gases is introduced into the system from the start of treatment within the range of 0.01 NL/second to 1 NL/second.

In addition, for efficiently introducing the single substance gas or the mixed gas into the decomposition solution, the gas may be mechanically microbubbled and introduced.

Furthermore, the method of supplying oxygen other than the method of introducing the single substance gas or the mixed gas may include adding, for example, a peroxide, such as hydrogen peroxide, benzoyl peroxide, and peracetic acid, a peroxy acid, perchloric acid, permanganic acid, nitric acid, and a salt thereof.

The peroxide, peroxy acid, perchloric acid, permanganic acid, nitric acid, and the salt thereof added to the decomposition solution is preferably added to the decomposition solution at 0.01 mL/second or more. This can further accelerate the decomposition rate of the resin. From a similar viewpoint, it is preferable to introduce a compound at 0.01 mL/second or more into the system (the decomposition solution) from the start of treatment. More preferably, the compound is introduced into the system from the start of treatment within the range of 0.01 mL/second to 1 mL/second.

Additionally, in the present embodiment, it is preferable to include a step of separating water vapor from the gas generated through the decomposition. Methods for separating water vapor include cooling and processing with a water vapor removal membrane. When a such as sulfuric acid of sulfuric acid, etc. serving as the decomposition solution is heated to decompose the resin, water vapor is mixed into the generated gas. Removing water vapor from the generated gas helps prevent degradation of the membrane used for separating oxygen, nitrogen, and carbon dioxide or clogging in the membrane, if the membrane is a porous membrane, thereby maintaining membrane separation performance. By maintaining membrane separation performance, high-concentration carbon dioxide gas can be obtained, making it more suitable for use as an industrial raw material. Among these, removing water vapor by cooling is preferable due to the simplicity of the step and low energy consumption in separation.

### <Recycled Reinforcing Material, Intermediate Base Material, and Composite Material>

By performing the above-described method for processing a composite material of the present embodiment, a reinforcing material and a gas can be obtained.

Here, details of a reinforcing material, an intermediate base material, and a composite material obtained through the method for processing a composite material of the present embodiment will be described below.

In the present embodiment, when a material is recycled using the above-described method for processing a composite material, it is preferable that the strength of the recycled reinforcing material is 80% or more of the strength of the reinforcing material before recycling, and that the shape retention rate of the reinforcing material before and after recycling is 90% or more.

Furthermore, in the present embodiment, when the reinforcing material is recycled using the above-described method, it is more preferable that the strength of the recycled reinforcing material is 90% or more of the strength of the reinforcing material before recycling, and that the shape retention rate of the reinforcing material before and after recycling is 80% or more.

The strength of the reinforcing material, the shape retention rate before and after recycling, and the strength ratio of the reinforcing material can be measured using the following methods:
- Strength of Reinforcing Material
   For fibrous reinforcement materials, the tensile strength in the longitudinal direction is measured at 23 °C with a tensile speed of 1.5 mm/min using a universal testing machine (EZ TEST-5N, manufactured by Shimadzu Corporation). The average strength of 80 randomly selected fibrous reinforcement materials is used as the strength.
   For particulate reinforcement materials, the strength is measured at 23 °C under a load of 1000 mN using a micro-compression tester (MCT-510, manufactured by Shimadzu Corporation). The average strength of 50 randomly selected particulate reinforcement materials is used as the strength.
- Shape Retention Rate
   The shape retention rate is measured by the diameter of the reinforcement material using a scanning probe microscope (SPM-9700, manufactured by Shimadzu Corporation) and calculating the ratio of before and after recycling. The diameter used to calculate the ratio was selected according to the shape of the reinforcement material.
   For fibrous reinforcement materials, the average diameter in the width direction of 10 randomly selected fibrous reinforcement materials is used.
   For particulate reinforcement materials, the average of the major and minor diameters are measured. The average of 10 randomly selected particulate reinforcement materials is used as the average of major and minor diameters.
- Strength Ratio (%)
   The strength ratio (%) of the reinforcement material is calculated using the following formula.
   Strength Ratio (%) = 100 × (Strength of the reinforcement material recovered from the reinforced composite material / Strength of the reinforcement material before compositing)

In the present embodiment, when a fibrous reinforcing material is used, the fiber length of the recycled reinforcing material is preferably 0.5 µm or more, more preferably 1 µm or more, and even more preferably 10 mm or more.

Additionally, the recycled material may be processed appropriately to produce an intermediate base material.

The intermediate base material of the present embodiment may be a continuous fiber or a nonwoven fabric that includes a recycled reinforcing material.

In the present embodiment, a recycled composite material may be produced by compounding the above-described recycled reinforcing material or intermediate base material into a base material such as resin.

Furthermore, when a composite material is recycled by performing the above-described method for processing a composite material, the strength of the recycled composite material is preferably 65% or more, more preferably 70% or more, and even more preferably 75% or more of the strength of a composite material made using the reinforcing material before recycling. Even furthermore, the strength of the recycled composite material is preferably 80% or less, more preferably 90% or less of the strength of a composite material made using the reinforcing material before recycling.

It should be noted that the strength of the composite material is the one measured in the manner similar to the above-described reinforcing material.

The recycling of the present embodiment utilizes the above-described method for processing a composite material, after recovering a reinforcing material from a composite material composed of a resin and the reinforcing material by decomposing the resin by sulfuric acid and heating, the following may be performed:
D) a step of compounding the recovered (recycled) reinforcing material with a base material to regenerate a composite material.

### <Recovered Gas>

The gas of the present embodiment is recovered together with a reinforcing material when recovering the reinforcing material from a composite material composed of a resin and the reinforcing material by decomposing the resin with sulfuric acid and heating.

Additionally, it is preferable that the ratio of carbon dioxide in the recovered gas is 90 wt% or more.

This allows not only for the recovery of reinforcing materials after the decomposing the resin in the composite material but also for the efficient collection and reuse of the carbon dioxide generated during thermal decomposition.

### <Recycling System>

The recycling system of the present embodiment is a system that includes a step of recovering a reinforcing material by decomposing a resin from a composite material comprising the resin and the reinforcing material by sulfuric acid and heating,
wherein the recycling system comprising reusing a gas, liquid, or solid generated during the decomposition of the resin as an industrial raw material.

As mentioned above, the reutilization of the recovered gas and solid enables the reuse of the recovered carbon dioxide, as well as the reuse of the recovered reinforcing material, intermediate base material, and composite material.

Furthermore, by recovering the liquid in addition to recovering the reinforcing material after decomposing the resin in a composite material, the liquid can also be reused as a raw material.

### EXAMPLES

The following provides a description of the present disclosure through specific examples and comparative examples. However, the present disclosure is not limited to the following examples.

### (Preparation of Composite Material)

### (A) Raw Materials

Reinforcing material: 100 parts by mass of the reinforcing material described in each Example and Comparative Example.
- Carbon fiber: Torayca T700SC-12K-50C (manufactured by Toray Industries, Inc.)
- Glass Fiber: RS440 RR-520 (manufactured by Nitto Boseki Co., Ltd.)

Base Material:
- Epoxy resin
   EPIKOTE 828 (manufactured by Japan Epoxy Resin Co., Ltd.): 20 parts by mass
   EPIKOTE 834 (manufactured by Japan Epoxy Resin Co., Ltd.): 20 parts by mass
   EPIKOTE 1001 (manufactured by Japan Epoxy Resin Co., Ltd.): 25 parts by mass
   EPIKOTE 154 (manufactured by Japan Epoxy Resin Co., Ltd.): 35 parts by mass
- Curing agent: DICY7 (manufactured by Japan Epoxy Resin Co., Ltd.): 4 parts by mass
- Phosphorus compound: Novared 120 (manufactured by Rin Kagaku Kogyo Co., Ltd.) 3 parts by mass
- Curing accelerator: Omicure 24 (manufactured by P.T.I Japan Co., Ltd.): 5 parts by mass
- Polyvinyl formal: VINYLEC K (manufactured by Chisso Corporation): 5 parts by mass

### (B) Production Method

The above-listed raw materials were mixed using a kneader according to the following procedure to obtain an epoxy resin composition in which polyvinyl formal was uniformly dissolved.
(a) Each epoxy resin raw material and polyvinyl formal were stirred at 150 to 190 °C for 1 to 3 hours while heating to uniformly dissolve the polyvinyl formal.
(b) The resin temperature was lowered to 90 to 110 °C, a phosphorus compound was added, and stirring was performed for 20 to 40 minutes.
(c) The resin temperature was lowered to 55 to 65 °C, and dicyandiamide and 3-(3,4-dichlorophenyl)-1,1-dimethylurea were added. The mixture was kneaded at this temperature for 30 to 40 minutes, then taken out from the kneader to obtain a resin composition.
(d) The prepared resin composition was applied onto release paper using a reverse roll coater to produce a resin film. The amount of the resin per unit area of the resin film was set to 25 g/m².
(e) Next, the reinforcing material was aligned into a sheet shape so that the weight of the reinforcing material per unit area was 100 g/m². The above-described resin film was laminated on both sides of the reinforcing material, and the resin composition was impregnated by heat and pressure to produce a unidirectional prepreg.
(f) The above-described prepreg was cured at 150 °C for 30 minutes to prepare an evaluation sample.

In each Example and Comparative Example described later, the decomposition gas was analyzed, and the carbon dioxide ratio was calculated under the following conditions.

### (1) Separation of Decomposition Gas

### - Synthesis of Polyethylene Oxide Terminated with Alkoxysilyl Groups

First, a 500 mL four-neck glass flask was purged with nitrogen. Then, 10.0 g of 3-aminopropyltrimethoxysilane (KBM903, manufactured by Shin-Etsu Chemical Co., Ltd.) and 100 mL of ethanol (special grade, manufactured by Tokyo Chemical Industry Co., Ltd.) were added. This mixture was stirred using a stirrer, and after dissolution was achieved, 47.5 g of polyethylene oxide diglycidyl ether (manufactured by Aldrich, number of PEO chain repeating units: 9, Mw: 526) was added. The solution temperature was raised to 90 °C at a rate of 3 °C/min. Reflux heating was performed at 90 °C for 72 hours, and after cooling, ethanol was removed using an evaporator and a vacuum pump. The obtained product was a yellowish, viscous, transparent liquid. The product was identified by a ¹H-NMR measurement, verifying the synthesis of a polyethylene oxide terminated with alkoxysilyl groups (hereinafter referred to as PEO2).

### - Preparation of Gas Separation Membrane

1.8 g of a commercially available oxime-type room temperature curing silicone rubber, TSE382 (manufactured by Momentive Performance Materials), composed mainly of polydimethylsiloxane with silanol groups at both ends, was measured and added to a 50 mL vial bottle. 0.2 g of the previously synthesized PEO2 was added, and the mixture was diluted to 10 wt% with THF (manufactured by Wako Pure Chemical Industries, Ltd.). The solution was stirred using a wave rotor for 5 hours to obtain a homogeneous solution. The obtained solution was spread in a PFA dish and left in a vacuum dryer. The temperature was set to 50 °C. The vacuum pressure was gradually increased over 5 hours to 0.13 kPa, maintaining this state for 15 hours, thereby obtaining a uniform, dense membrane with a thickness of 350 µm.

The reaction between polydimethylsiloxane with silanol groups at both ends and PEO2 was confirmed using DSC, based on changes in the Tg of PEO2. Specifically, PEO2 had a Tg of -65 °C, but after the formation of the film, due to the reaction with polydimethylsiloxane, the Tg of PEO2 at -65 °C disappeared, and the obtained gas separation membrane exhibited only a single Tg at -42 °C. This confirmed that polydimethylsiloxane with silanol groups at both ends and PEO2 were crosslinked, forming a uniform structure.

### - Gas Separation Step

A module was prepared by installing a gas separation membrane, cut to a diameter of 5 cm, into a metal-made column. A measurement cylinder was connected to one side of the module, the module and cylinder were evacuated using a vacuum pump, and the valve was closed. The vacuum pump was then removed, and a cylinder containing the collected generated gas was connected to the module in place of the pump. The valve was opened to allow the gas to pass through the separation membrane and be transferred to the measurement cylinder for measurements of the gas.

### (2) Analysis of Recovered Gas

### - Mass of Carbon Dioxide

The recovered gas was analyzed using gas chromatography equipped with a thermal conductivity detector.

### (3) Calculation of Carbon Dioxide Ratio

The carbon dioxide ratio was calculated using the following formula.Carbon Dioxide Ratio (%) = (Mass of carbon dioxide / Total mass of recovered gas) × 100%

### [Example 1]

The electrolytic sulfuric acid method 1 was used as the method for separating and recovering the reinforcing material from the composite material.

Specifically, diamond electrodes with an electrode area of 7 cm² were used, and while water cooling the electrodes, a sulfuric acid solution with a concentration of 60% was electrolyzed in a diaphragm-type electrolytic cell to prepare a treatment solution containing oxidatively active species. The amount of the sulfuric acid aqueous solution used per electrolysis cycle was 100 mL. The current was 0.3 to 1.0 A/cm², the voltage was 17 to 20 V, and the electrolysis time was 120 minutes.

0.5 g of the composite material was immersed in 50 mL of the prepared treatment solution containing oxidatively active species. The decomposition conditions were as follows: under air atmosphere at 140 °C for 6 hours.

The generated decomposition gas was collected while being cooled using a Liebig condenser.

Thereafter, through the gas separation step described above, the recovered gas was obtained.

The obtained recovered gas had a carbon dioxide ratio of 95%.

The processed reinforcing material was recovered by filtering and vacuum drying the decomposition liquid after the decomposition.

The carbon fibers were recovered in fibrous form. The glass fibers were recovered in fibrous form.

### [Example 2]

The electrolytic sulfuric acid method 2 was used as the method for separating and recovering the reinforcing material from the composite material.

Specifically, diamond electrodes with an electrode area of 7 cm² were used, and while water cooling the electrodes, a sulfuric acid solution with a concentration of 60% was electrolyzed in a diaphragm-type electrolytic cell to prepare a treatment solution containing oxidatively active species. The amount of the sulfuric acid aqueous solution used per electrolysis cycle was 100 mL. The current was 0.3 to 1.0 A/cm², the voltage was 17 to 20 V, and the electrolysis time was 120 minutes.

40 mL of the prepared treatment solution containing oxidatively active species was mixed with 10 mL of a commercially available 30% hydrogen peroxide solution (FUJIFILM Wako Pure Chemical Corporation), and 0.5 g of the composite material was immersed in the mixture. The decomposition conditions were as follows: under air atmosphere at 140 °C for 3 hours.

The generated decomposition gas was collected while being cooled using a Liebig condenser.

Thereafter, through the gas separation step described above, the recovered gas was obtained.

The obtained recovered gas had a carbon dioxide ratio of 99%.

The processed reinforcing material was recovered by filtering and vacuum drying the decomposition liquid after the decomposition.

The carbon fibers were recovered in fibrous form. The glass fibers were recovered in fibrous form.

### [Example 3]

The electrolytic sulfuric acid method 3 was used as the method for separating and recovering the reinforcing material from the composite material.

Specifically, diamond electrodes with an electrode area of 7 cm² were used, and while water cooling the electrodes, a sulfuric acid solution with a concentration of 60% was electrolyzed in a diaphragm-type electrolytic cell to prepare a treatment solution containing oxidatively active species. The amount of the sulfuric acid aqueous solution used per electrolysis cycle was 100 mL. The current was 0.3 to 1.0 A/cm², the voltage was 17 to 20 V, and the electrolysis time was 120 minutes.

The prepared treatment solution containing oxidatively active species (40 mL) was added with 10 mL of a commercially available 30% hydrogen peroxide solution (manufactured by FUJIFILM Wako Pure Chemical Corporation), and 0.5 g of the composite material was immersed while further bubbling air at 500 mL/min. The decomposition conditions were as follows: under air atmosphere at 140 °C for 3 hours.

The generated decomposition gas was collected while being cooled using a Liebig condenser.

Thereafter, through the gas separation step described above, the recovered gas was obtained.

The obtained recovered gas had a carbon dioxide ratio of 99%.

The processed reinforcing material was recovered by filtering and vacuum drying the decomposition liquid after the decomposition.

The carbon fibers were recovered in fibrous form. The glass fibers were recovered in fibrous form.

### [Example 4]

The sulfuric acid + hydrogen peroxide method was used as the method for separating and recovering the reinforcing material from the composite material.

40 mL of a commercially available 64% sulfuric acid (FUJIFILM Wako Pure Chemical Corporation) was mixed with 10 mL of a commercially available 30% hydrogen peroxide solution (FUJIFILM Wako Pure Chemical Corporation), and 0.5 g of the composite material was immersed in the mixture. The decomposition conditions were as follows: under air atmosphere at 140 °C for 12 hours.

The generated decomposition gas was collected while being cooled using a Liebig condenser.

Thereafter, through the gas separation step described above, the recovered gas was obtained.

The obtained recovered gas had a carbon dioxide ratio of 90%.

The processed reinforcing material was recovered by filtering and vacuum drying the decomposition liquid after the decomposition.

The carbon fibers were recovered in fibrous form. The glass fibers were recovered in fibrous form.

### [Comparative Example 1]

The concentrated sulfuric acid method was used as the method for separating and recovering the reinforcing material from the composite material.

0.5 g of the composite material was immersed in 50 mL of a commercially available 95% sulfuric acid (FUJIFILM Wako Pure Chemical Corporation). The decomposition conditions were as follows: under air atmosphere at 140 °C for 6 hours.

The generated decomposition gas was collected while being cooled using a Liebig condenser.

Thereafter, through the gas separation step described above, the recovered gas was obtained.

The obtained recovered gas had a carbon dioxide ratio of 1% or less. The decomposition solution after the decomposition was dark black, indicating organic matter.

The processed reinforcing material was recovered by filtering and vacuum drying the decomposition liquid after the decomposition.

The carbon fibers were recovered in fibrous form. The glass fibers were recovered in fibrous form.

### [Comparative Example 2]

The solvent decomposition method was used as the method for separating and recovering the reinforcing material from the composite material.

50 mL of a commercially available benzyl alcohol (FUJIFILM Wako Pure Chemical Corporation) was mixed with 5.3 g of a commercially available tripotassium phosphate (FUJIFILM Wako Pure Chemical Corporation), and 0.5 g of the composite material was immersed in the mixture. The decomposition conditions were as follows: under air atmosphere at 200 °C for 24 hours.

The generated decomposition gas was collected while being cooled using a Liebig condenser.

Thereafter, through the gas separation step described above, the recovered gas was obtained.

The obtained recovered gas had a carbon dioxide ratio of 1% or less. The decomposition solution after the decomposition was brown, indicating residual organic matter.

The processed reinforcing material was recovered by filtering and vacuum drying the decomposition liquid after the decomposition.

The carbon fibers were recovered in fibrous form. The glass fibers were recovered in fibrous form.

### [Comparative Example 3]

The concentrated nitric acid method was used as the method for separating and recovering the reinforcing material from the composite material.

0.5 g of the composite material was immersed in 50 mL of a commercially available 90% nitric acid (FUJIFILM Wako Pure Chemical Corporation). The decomposition conditions were as follows: under air atmosphere at 200 °C for 24 hours.

The generated decomposition gas was collected while being cooled using a Liebig condenser.

Thereafter, through the gas separation step described above, the recovered gas was obtained.

The obtained recovered gas had a carbon dioxide ratio of 1% or less. The decomposition solution after the decomposition was dark brown, indicating residual organic matter.

The processed reinforcing material was recovered by filtering and vacuum drying the decomposition liquid after the decomposition.

The carbon fibers were recovered in fibrous form. The glass fibers were recovered in fibrous form.

### [Comparative Example 4]

The superheated steam method was used as the method for separating and recovering the reinforcing material from the composite material.

0.5 g of the composite material was placed in a ceramic-made container. The decomposition conditions were as follows: superheated steam generated and introduced using a UPSS superheated steam generator (manufactured by Tokuden Corporation), under a nitrogen atmosphere at 700 °C for 6 hours.

The collected decomposition gas was processed through the above-described gas separation step to obtain recovered gas.

The obtained recovered gas had a carbon dioxide ratio of 1% or less.

The processed reinforcing material was collected without further procedures.

The carbon fibers were recovered in fibrous form. The glass fibers were thermally melted and could not be recovered.

### [Comparative Example 5]

The high-temperature low-oxygen decomposition method was used as the method for separating and recovering the reinforcing material from the composite material.

0.5 g of the composite material was placed in a ceramic-made container. The decomposition conditions were as follows: under the atmosphere of 5% oxygen / 95% nitrogen at 700 °C for 6 hours.

The collected decomposition gas was processed through the above-described gas separation step to obtain recovered gas.

The obtained recovered gas had a carbon dioxide ratio of 60% or less.

The processed reinforcing material was collected without further procedures.

The carbon fibers were recovered in fibrous form. The glass fibers were thermally melted and could not be recovered.

### [Comparative Example 6]

The low-temperature high-oxygen decomposition method was used as the method for separating and recovering the reinforcing material from the composite material.

0.5 g of the composite material was placed in a ceramic-made container. The decomposition conditions were as follows: under air atmosphere at 300 °C for 24 hours.

The collected decomposition gas was processed through the above-described gas separation step to obtain recovered gas.

The obtained recovered gas had a carbon dioxide ratio of 75%.

The processed reinforcing material was collected without further procedures.

The carbon fibers were recovered in fibrous form. The glass fibers were recovered in fibrous form.

### [Comparative Example 7]

The electrolytic sulfuric acid method 2 was used as the method for separating and recovering the reinforcing material from the composite material.

Specifically, diamond electrodes with an electrode area of 7 cm² were used, and while water cooling the electrodes, a sulfuric acid solution with a concentration of 60% was electrolyzed in a diaphragm-type electrolytic cell to prepare a treatment solution containing oxidatively active species. The amount of the sulfuric acid aqueous solution used per electrolysis cycle was 100 mL. The current was 0.3 to 1.0 A/cm², the voltage was 17 to 20 V, and the electrolysis time was 120 minutes.

40 mL of the prepared treatment solution containing oxidatively active species was mixed with 10 mL of a commercially available 30% hydrogen peroxide solution (FUJIFILM Wako Pure Chemical Corporation), and 0.5 g of the composite material was immersed in the mixture. The decomposition conditions were as follows: under air atmosphere at 140 °C for 3 hours.

The generated decomposition gas was collected while being cooled using a Liebig condenser.

The collected gas was recovered directly without undergoing the gas separation step.

The obtained recovered gas had a carbon dioxide ratio of 70%.

The processed reinforcing material was recovered by filtering and vacuum drying the decomposition liquid after the decomposition.

The carbon fibers were recovered in fibrous form. The glass fibers were recovered in fibrous form.

### [Comparative Example 8]

The electrolytic sulfuric acid method 2 was used as the method for separating and recovering the reinforcing material from the composite material.

Specifically, diamond electrodes with an electrode area of 7 cm² were used, and while water cooling the electrodes, a sulfuric acid solution with a concentration of 60% was electrolyzed in a diaphragm-type electrolytic cell to prepare a treatment solution containing oxidatively active species. The amount of the sulfuric acid aqueous solution used per electrolysis cycle was 100 mL. The current was 0.3 to 1.0 A/cm², the voltage was 17 to 20 V, and the electrolysis time was 120 minutes.

40 mL of the prepared treatment solution containing oxidatively active species was mixed with 10 mL of a commercially available 30% hydrogen peroxide solution (FUJIFILM Wako Pure Chemical Corporation), and 0.5 g of the composite material was immersed in the mixture. The decomposition conditions were as follows: under air atmosphere at 140 °C for 3 hours.

The generated decomposition gas was collected without cooling.

Thereafter, through the gas separation step described above, the recovered gas was obtained.

The obtained recovered gas had a carbon dioxide ratio of 70%.

The processed reinforcing material was recovered by filtering and vacuum drying the decomposition liquid after the decomposition.

The carbon fibers were recovered in fibrous form. The glass fibers were recovered in fibrous form.

**[Table 1]**

| | Separation and recovery method for reinforcing material | Decomposition conditions | | | | Gas separation step | Gas cooling step | Carbon dioxide in decomposition gas | | Recovery of carbon fiber | Recovery of glass fibers |
|---|---|---|---|---|---|---|---|---|---|---|---|
| | | Atm osphere | Decomposition liquid | Temp. (°C) | Time (h) | | | Ratio (mass%) | Use as raw material | | |
| Example 1 | Electrolytic sulfuric acid method 1 | air | Electrolytic sulfuric acid | 140 | 6 | Yes | Yes | 95 | ○ | ○ | ○ |
| Example 2 | Electrolytic sulfuric acid method 2 | air | Electrolytic sulfuric acid + hydrogen peroxide | 140 | 3 | Yes | Yes | 99 | | ○ | ○ |
| Example 3 | Electrolytic sulfuric acid method 3 | air | Electrolytic sulfuric acid + hydrogen peroxide + air bubbling | 140 | 3 | Yes | Yes | 99 | | ○ | ○ |
| Example 4 | Sulfuric acid + hydrogen peroxide method | air | Sulfuric acid + hydrogen peroxide | 140 | 12 | Yes | Yes | 90 | ○ | ○ | ○ |
| Comp. Ex. 1 | Concentrated sulfuric acid method | air | Sulfuric acid | 140 | 6 | Yes | Yes | ≦1 | x | ○ | ○ |
| Comp. Ex. 2 | Solvent decomposition method | air | Benzyl alcohol | 200 | 24 | Yes | Yes | ≦1 | x | ○ | ○ |
| Comp. Ex. 3 | Concentrated nitric acid method | air | Nitric acid | 200 | 24 | Yes | Yes | ≦1 | x | ○ | ○ |
| Comp. Ex. 4 | Superheated steam method | nitrogen | - | 700 | 6 | Yes | - | ≦1 | x | ○ | x |
| Comp. Ex. 5 | High-temperature low-oxygen decomposition method | 5% oxygen / 95% nitrogen | - | 700 | 6 | Yes | - | 60 | x | ○ | x |
| Comp. Ex. 6 | Low-temperature high-oxygen decomposition method | air | - | 300 | 24 | Yes | - | 75 | x | ○ | ○ |
| Comp. Ex. 7 | Electrolytic sulfuric acid method 4 | air | Electrolytic sulfuric acid + hydrogen peroxide | 140 | 3 | No | Yes | 70 | x | ○ | ○ |
| Comp. Ex. 8 | Electrolytic sulfuric acid method 5 | air | Electrolytic sulfuric acid + hydrogen peroxide | 140 | 3 | Yes | No | 70 | x | ○ | ○ |

According to Examples 1 to 4, the generated decomposition gas had a high carbon dioxide ratio and had purity suitable for use as a raw material for industrial materials. Additionally, according to Examples 1 to 4, carbon fibers and glass fibers, which are reinforcing materials, were recovered in fibrous form, demonstrating the effectiveness of the separation and recovery method of reinforcing materials.

In Comparative Examples 1 to 8, organic matter remained in the decomposition liquid, preventing the generation of decomposition gas, or the carbon dioxide ratio in the decomposition gas was too low for utilization as an industrial raw material, demonstrating that these methods were not effective for the separation and recovery of reinforcing materials.

### INDUSTRIAL APPLICABILITY

According to the present disclosure, a method for processing a composite material is provided that not only enables the recovery of a reinforcing material from a reinforced composite material but also allows the utilization of carbon dioxide generated during decomposition as an industrial raw material. This makes it possible to significantly reduce the environmental burden.

## Claims

1. A method for processing a composite material, comprising recovering a reinforcing material from the composite material comprising a resin and the reinforcing material by decomposing the resin by sulfuric acid and heating,
the method further comprising recovering a gas generated through the decomposition of the resin, and a ratio of carbon dioxide in the recovered gas being 90 mass% or more.

2. The method for processing a composite material according to claim 1, further comprising utilizing the recovered gas as an industrial raw material.

3. The method for processing a composite material according to claim 1, further comprising utilizing the carbon dioxide contained in the recovered gas as an industrial raw material.

4. The method for processing a composite material according to claim 1 or 3, wherein the recovering the gas includes separating oxygen and nitrogen from the gas.

5. The method for processing a reinforced composite material according to claim 1 or 3, wherein the recovering the gas includes separating water vapor from the gas.

6. The method for processing a composite material according to claim 1 or 3, wherein the recovering the reinforcing material comprises decomposing the resin by using a solution containing oxidatively active species derived from sulfuric acid as a decomposition solution to immerse the composite material in the decomposition solution and performing heating.

7. The method for processing a composite material according to claim 6, wherein the decomposition solution is a solution obtained through electrolysis of a sulfuric acid solution.

8. The method for processing a composite material according to claim 6, wherein the decomposition solution is heated to and maintained at a temperature of 100 °C to 200 °C, and
the reinforcing material is recovered by performing filtering, washing, and drying after the decomposition of the resin.

9. The method for processing a reinforced composite material according to claim 7, wherein the recovering the reinforcing material further comprises supplying oxygen to the solution obtained through electrolysis of sulfuric acid.

10. The method for processing a composite material according to claim 1 or 3, wherein the reinforcing material of the composite material is a carbon material of a carbon fiber, a carbon nanotube, or a graphene.

11. A gas recovered together with a reinforcing material when the reinforcing material is recovered from a composite material comprising a resin and the reinforcing material by decomposing the resin by sulfuric acid and heating,
a ratio of carbon dioxide in the recovered gas being 90 mass% or more.

12. A recycling system comprising recovering a reinforcing material from a composite material comprising a resin and the reinforcing material by decomposing the resin by sulfuric acid and heating,
the recycling system comprising reutilizing a gas, liquid, or solid generated during the decomposition of the resin as an industrial raw material.

13. The recycling system according to claim 12, wherein a raw material reutilized as the industrial raw material is a gas.
